# EUROPEAN PATENT APPLICATION

(11) **EP 3 460 736 A1**
(43) Date of publication of application: **27.03.2019**
(21) Application number: 17799301.1
(22) Date of filing: 12.05.2017
(51) Int. Cl.: G06Q 30/02

(54) **POINT DONATION SYSTEM**

(30) Priority: 19.05.2016 JP 2016100125
(71) Applicant: Matsumoto, Naozumi, Tokyo 107-0062 (JP)
(72) Inventor: Matsumoto, Naozumi, Tokyo 107-0062 (JP)
(74) Representative: Klunker IP Patentanwälte PartG mbB
(86) International application number: PCT/JP2017/018057
(87) International publication number: WO 2017/199877

(57) **Abstract**

[Problem]

To provide a point donation system which, upon selecting a project for which a donation is to be granted on the basis of a consensus of members, grants a donation according to the number of points given to the members from a point service provider.

[Solution]

A point management unit accumulates the donation points given to members. A candidate project management unit manages multiple kinds of candidate projects for donations. A project determination unit, upon receiving the votes from members regarding the candidate projects, selects one or more projects for which a donation is to be granted in accordance with the voting result. The point management unit performs processing for allocating an amount of donation corresponding to the total points accumulated by all of the members to the selected projects in accordance with the voting result.

## Description

### [Technical Field]

The present invention relates to a point donation system that uses a computer to make a donation of the amount in accordance with the number of points granted to the members from a point service provider.

### [Background Art]

In a service conventionally known, when a credit card member uses the credit card for e.g. payment, points are granted in accordance with the amount of payment. In another service conventionally known, a shop selling goods and providing services or a common point service provider commissioned by such shops grants points in accordance with the amount of payment of the customers. A system for realizing such a service is known and disclosed in e.g. the following Patent Literature 1.

The points granted to each member are usually managed by a computer-based point management system. These points can be e.g. used for payment like a rebate coupon or electronic money on shopping, or exchanged for certain goods after saving a prescribed amount.

### [Citation List]

### [Patent Literature]

[PTL 1]
Japanese Patent Unexamined Publication No. JP2002-297990

### [Summary]

### [Technical Problem]

However, the conventional point management system does not sufficiently meet the demand of people who wish to donate accumulated points to projects appropriate for donation with a simple operation.

In view of such circumstances, an object of the present invention is to provide a point donation system that enables donations using granted points to be made with a simple operation, and that further enables projects for donation to be determined based on the consensus of e.g. members.

### [Solution to Problem]

In order to achieve this object, the point donation system according to the present invention is a point donation system that manages donation points granted to a plurality of members from a point service provider and that makes a donation using the donation points. The point donation system comprises a member information management unit configured to manage member information of the plurality of members; a point management unit configured to manage the donation points granted to the members; a candidate project management unit configured to manage a plurality of kinds of candidate projects for the donation; and a project determination unit configured to receive voting from the members authenticated by the member information management unit for one or more of the plurality of candidate projects managed by the candidate project management unit and to select one or more target projects for the donation from among the plurality of candidate projects in accordance with a result of the voting. The project determination unit further performs processing for sending information indicating the selected target projects and information indicating the result of the voting to the point management unit. The point management unit further performs processing for allocating, in accordance with the result of the voting, an amount of donation corresponding to total donation points accumulated by all of the members to the target projects selected by the project determination unit.

Preferably, in the present invention, the point management unit accumulates, as the donation points, only a predetermined proportion or number of points from among the points granted to the members by the point service provider.

Preferably, in the present invention, the point service provider is a credit card company, a provider of goods or services, or a provider of a common point service commissioned by a plurality of providers of goods or services.

Preferably, in the present invention, a voting right for one vote is given to each member for each prescribed period.

Alternatively, and preferably, in the present invention, a voting right for a number of votes corresponding to a number of the accumulated donation points is given to each of the members for each prescribed period.

Preferably, in the present invention, the point donation system further comprises a volunteer management unit configured to manage a plurality of volunteer activities. The volunteer management unit performs processing for receiving, from the point management unit, information indicating a cumulative number of the donation points granted to and donated by the members, and for granting the members a volunteer participation right determined in accordance with the cumulative number.

### [Effect of the invention]

According to the present invention, the project determination unit selects a target project for donation based on the voting of the members. Furthermore, the point management unit makes a donation corresponding to the total points accumulated by all of the members to the selected target project. Thus, the present invention can make a donation based on the consensus of e.g. the members with a simple operation.

In the present invention, from among the points granted to the members by the point service provider, only a predetermined proportion or number of points are accumulated as the donation points. Thus, the members can freely determine the proportion or amount of points to be used for donation.

In the present invention, points granted to card users by a credit card company, points granted to customers by a provider of goods or services, or points granted to customers by a common point service provider commissioned by a plurality of providers of goods or services, can be used for donation.

In the present invention, a voting right for one vote is given to each member. Thus, the obtained voting result can reflect the opinion of the members relatively precisely.

In the present invention, the number of votable times is increased with the number of possessed points. Thus, as the amount of donation made by a member becomes larger, the project wished by the member is more likely to receive donation. This can prompt the members to actively make a large amount of donation.

In the present invention, a volunteer participation right for participating in a prescribed volunteer activity is granted in accordance with the cumulative number of donation points (i.e. the aggregate number of donation points). This can prompt the members interested in volunteer activities to actively use the system for point donation.

### [Brief Description of Drawings]

FIG. 1A is a block diagram schematically showing the entire configuration of a point donation system according to an embodiment of the present invention.
FIG. 1B is a block diagram schematically showing the configuration of a point donation system server according to the embodiment.
FIG. 2 is a schematic flow chart for illustrating the point donation processing according to the embodiment.
FIG. 3 is a schematic flow chart for illustrating the project determination processing according to the embodiment.
FIG. 4 is a schematic flow chart for illustrating the volunteer participation right notification processing according to the embodiment.

### [Detailed Description]

Embodiments of the present invention will now be described.

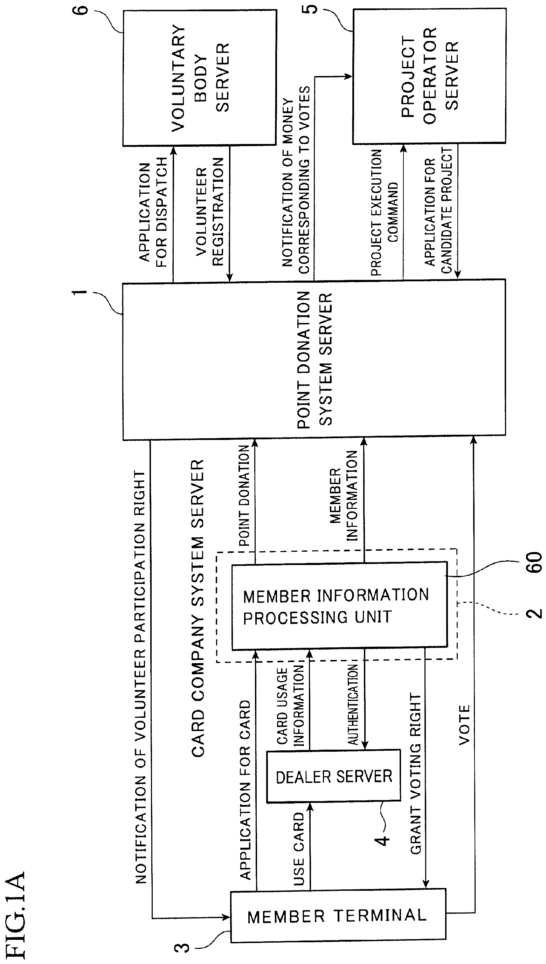

FIGS. 1A to 4 show an embodiment of the present invention.

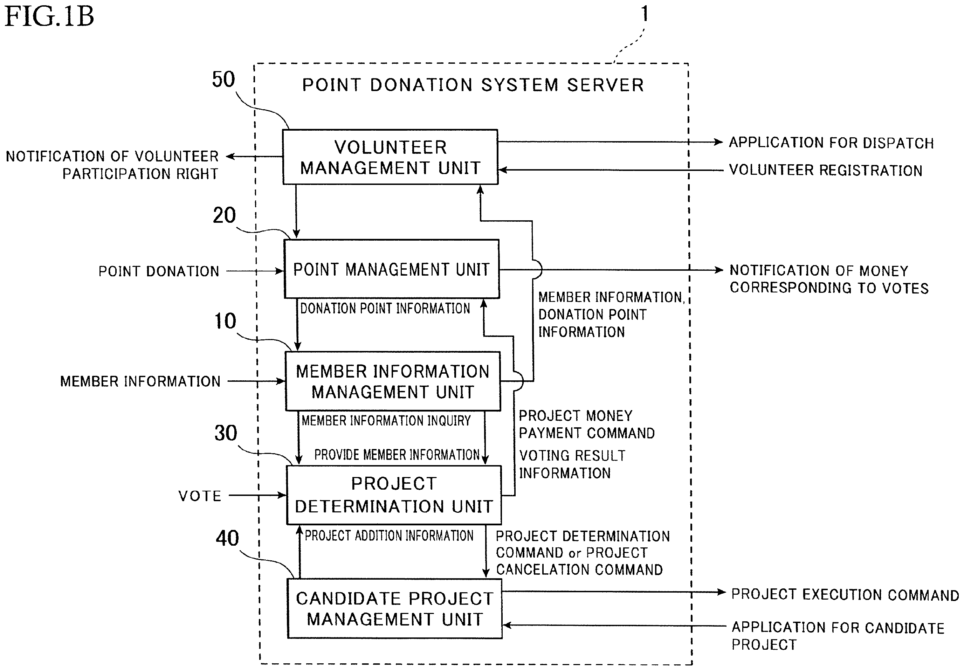

First, the basic configuration of the point donation system of the present embodiment is described with reference to FIGS. 1A and 1B.

The point donation system of the present embodiment automatically donates the total amount of points granted in accordance with the amount paid by members on e.g. shopping. The donated points are accumulated temporarily. Then, the donation is disbursed to projects determined by voting of all participating members. The present embodiment is targeted to donation by credit card members possessing a prescribed credit card. In the present application, the project is not limited to for-profit and continued organizational operations, but includes all projects such as social action projects and charity projects.

As is commonly known, when a credit card member uses a credit card for payment, points are automatically granted to the credit card member in accordance with the amount of payment. For instance, one point is granted for each credit card payment of 100 yen. Each point is equivalent to one yen. The total amount of points are automatically used for donation.

As shown in FIG. 1A, the point donation system of the present embodiment includes a point donation system server 1, a card company system server 2, a member terminal 3, a dealer server 4, a project operator server 5, and a voluntary body server 6.

The point donation system server 1 is a main server of the point donation system according to the present embodiment. As shown in FIG. 1B, this point donation system server 1 includes a member information management unit 10, a point management unit 20, a project determination unit 30, a candidate project management unit 40, and a volunteer management unit 50.

The member information management unit 10 manages member information provided from the member information processing unit 60 of the card company system server 2, described later. When the project determination unit 30, described later, confirms membership at the time of voting, this member information management unit 10 provides the corresponding member information. In addition, from the point management unit 20 described later, the member information management unit 10 is provided with information on donation points granted to each credit card member. Then, the member information management unit 10 updates the number of donation points of each credit card member stored therein. Furthermore, the member information management unit 10 provides information on the number of donation points of each credit card member to the volunteer management unit 50 described later.

The point management unit 20 receives point donation information from the member information processing unit 60 of the card company system server 2, and manages the accumulation status of donation points for each credit card member. This point donation information includes the number of donation points and information for specifying the corresponding credit card member (e.g. credit card number). Furthermore, this point management unit 20 provides the total amount of donation points accumulated for each credit card member to the member information management unit 10. Moreover, when this point management unit 20 is instructed by the project determination unit 30 to disburse points, the point management unit 20 converts the maintained donation points to the actual currency. Using e.g. a mail or a prescribed message sending function, the point management unit 20 sends a notification of the offerable donation amount to the project operator server 5 of the project operator instructed by the project determination unit 30.

The project determination unit 30 receives information on candidate projects that can be performed using donation points from the candidate project management unit 40 described later. The project determination unit 30 displays the information on a voting site (not shown). This project determination unit 30 receives project addition information indicating addition of a new candidate project from the candidate project management unit 40. Each time receiving the project addition information, the project determination unit 30 adds the new candidate project to the management object.

Furthermore, when a credit card member performs voting using the voting site, the project determination unit 30 performs processing for receiving the vote. In this processing, first, when the credit card member performs voting for a project, the project determination unit 30 makes an inquiry to the member information management unit 10 about whether the voter is a valid credit card member. As the result of this inquiry, when it is determined that the voter is a valid credit card member, the project determination unit 30 receives the vote and updates the voting result.

Furthermore, after a prescribed voting period (such as one year) has elapsed, the project determination unit 30 aggregates the voting result. Then, the project determination unit 30 displays the aggregation result on the voting site and determines a project to be performed using the donation based on the aggregation result. In the present embodiment, the donation is used to perform projects having the number (ratio) of votes obtained in the first to third ranks. Then, the project determination unit 30 sends a project determination command to the candidate project management unit 40. On the other hand, a project cancelation command may be sent to the candidate projects not selected in this aggregation. Alternatively, votes may be continually received until the next aggregation.

The candidate project management unit 40 manages candidate projects to be performed using the donation. This candidate project management unit 40 has a project solicitation site (not shown) for soliciting candidate projects. Each project operator accesses the project solicitation site through the Internet. The project operator fills in a form provided on the site with necessary information and sends the form to apply for a candidate project. When the candidate project management unit 40 receives a candidate project application, the content of the application is examined by e.g. the administrator of the point donation system server 1.

When it is determined valid to add the application to the candidate projects, the project is added to the management object of the candidate project management unit 40. Furthermore, project addition information indicating addition of the project to the candidate projects is sent to the project determination unit 30. The project determination unit 30 updates the voting site based on this project addition information.

Upon receiving the project determination command or project cancelation command (described above) from the project determination unit 30, the candidate project management unit 40 sends an associated project execution command or project cancelation notification to a prespecified contact address of the project operator server 5 of each project operator using e.g. a mail or a prescribed message sending function.

The volunteer management unit 50 has a volunteer site (not shown) that announces the content of one or more registered volunteer activities and the condition required to obtain the right for participating in the volunteer activities. In the present embodiment, the condition for participating in each volunteer activity is satisfied when the total number of donation points used for donation reaches the number of points specified for the volunteer activity. In the present application, the volunteer activity refers to an activity of voluntary participation irrespective of whether it is public or not.

The volunteer management unit 50 has a volunteer activity solicitation site (not shown) for soliciting the volunteer activities. A voluntary body accesses the volunteer activity solicitation site through the Internet. The voluntary body fills in an input form displayed on the site with necessary information and sends the form to apply for volunteer registration. When the volunteer management unit 50 receives a volunteer registration application, the content of the application is examined by e.g. the administrator of the point donation system server 1.

When it is determined valid to add the application to the solicited volunteer activities, the volunteer activity is added to the management object, and information on the volunteer activity is registered inside.

The volunteer management unit 50 receives member information of one of the credit card members and the total number of donation points used for donation from the member information management unit 10. The volunteer management unit 50 determines whether or not the number of donation points has reached the number required to participate in a prescribed volunteer activity. When the number of donation points has reached the required number, the volunteer management unit 50 notifies the credit card member that a volunteer participation right has been obtained.

The card company system server 2 is a server managed by a credit card company. This card company system server 2 includes a member information processing unit 60. The member information processing unit 60 has a new member solicitation site (not shown) for soliciting a new credit card member at any time. The credit card company uses this new member solicitation site to receive an application for the credit card. After a prescribed examination, the credit card company registers the applicant as a credit card member.

The card company system server 2 permits the registered credit card members to use the point donation system of the present embodiment. This enables the credit card member to use the above-described voting site and volunteer site using the member terminal 3 described later. To this end, the card company system server 2 announces the URL of e.g. the voting site and e.g. the voting method using e.g. a notification mail to the credit card member or a member page. In the present embodiment, a voting right for one vote is granted to each credit card member.

The member information processing unit 60 of the card company system server 2 stores and manages member information such as the name, address, telephone number, credit card number, and credit usage record of the credit card member. This member information processing unit 60 provides part or all of this member information to the member information management unit 10 of the point donation system server 1. When the credit card member newly uses the credit card, the member information processing unit 60 performs processing for granting donation points to the credit card member in accordance with the payment. In this processing, the member information processing unit 60 sends information on the newly granted donation points to the point management unit 20.

The member terminal 3 is a terminal possessed by the credit card member such as a personal computer, a smartphone, and a mobile telephone. This member terminal 3 is used to apply for issuance of a credit card to the member information processing unit 60 of the card company system server 2.

The member terminal 3 accesses an online shopping site (not shown) constructed in the dealer server 4 through the Internet. Then, the credit card member performs shopping using the issued credit card.

Furthermore, when the credit card member uses the above-described voting site or volunteer site, the member terminal 3 accesses the voting site or volunteer site. Moreover, the member terminal 3 receives, from the volunteer management unit 50, a notification that a right for participating in the volunteer activity is granted.

The dealer server 4 is a server for displaying the online shopping site of the dealer on the member terminal 3. That is, when the member terminal 3 accesses the online shopping site, the credit card member can pay for shopping using the credit card on the online shopping site.

When shopping is performed on the online shopping site, this dealer server 4 sends the usage information of the credit card to the member information processing unit 60 of the card company system server 2 described above and requests authentication. Then, the dealer server 4 receives information indicating the authentication result from the card company system server 2.

The project operator server 5 is a server of a company that stands as a candidate for the voting of a project to be performed using point-based donation. Normally, a plurality of project operators stand for candidates for the voting. However, FIG. 1A shows only one project operator server 5. The project operator server 5 accesses the project solicitation site (not shown) provided by the candidate project management unit 40 through the Internet. The project operator server 5 applies for a candidate project using an input form of the project solicitation site. The project operator server 5 has the function of receiving mails and messages from the candidate project management unit 40 and the point management unit 20.

The voluntary body server 6 is a server of a body that solicits participants in volunteer activities. The voluntary body server 6 may be in a plurality. However, FIG. 1A shows only one voluntary body server 6. The voluntary body server 6 accesses the volunteer activity solicitation site (not shown) provided by the volunteer management unit 50 through the Internet. The voluntary body server 6 applies for volunteer registration in accordance with an input form of the volunteer activity solicitation site. The voluntary body server 6 has the function of receiving mails and messages from the volunteer management unit 50 applying for e.g. dispatch of volunteers.

Next, the flow of each processing in the point donation system of the present embodiment is described. The point donation system is used by a plurality of credit card members. Even when the processing is described below with reference to the flow for one credit card member, the same processing is performed for each credit card member.

First, the flow from member registration to payment by the credit card member using the credit card on e.g. shopping is described with reference to FIGS. 1A to 2.

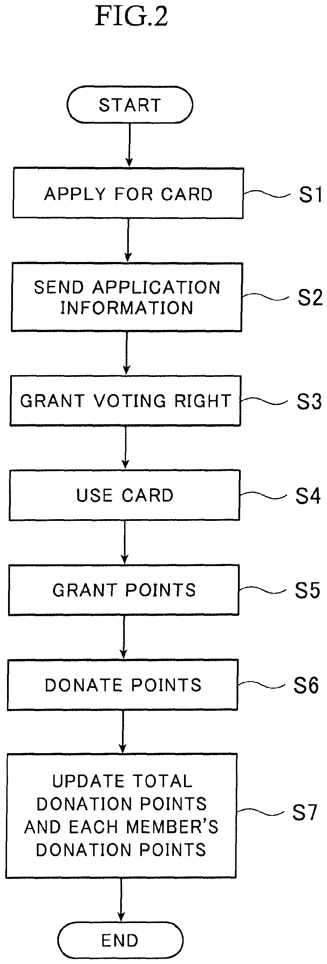

In the present embodiment, first, as shown in step S1 of FIG. 2, the member terminal 3 accesses the new member solicitation site possessed by the card company system server 2 to apply for a credit card. Then, a prescribed examination is performed in the card company. When the issuance of a credit card is permitted by this examination, the card company system server 2 records information on the new credit card member in the member information processing unit 60. As shown in step S2, the card company system server 2 sends the information of the new credit card member to the member information management unit 10 of the point donation system server 1.

Furthermore, as shown in step S3, the card company system server 2 makes a notification of granting one vote of voting right for a project on e.g. the registered mail address of the credit card member or the notification field of the member-only web site. The credit card member can receive this notification through the member terminal 3.

Then, the member terminal 3 logs in the online shopping site of the dealer server 4. As shown in step S4, when the member terminal 3 performs shopping using the credit card on the online shopping site, card usage information is sent from the dealer server 4 to the member information processing unit 60 of the card company system server 2.

As shown in step S5, the member information processing unit 60 performs processing for granting points in accordance with the amount paid for the shopping.

Furthermore, as shown in step S6, the member information processing unit 60 performs processing for automatically using the total amount of granted points for donation. In this processing, the member information processing unit 60 sends a notification of the credit card number and the number of donation points to the point management unit 20 of the point donation system server 1.

As shown in step S7, the point management unit 20 of the point donation system server 1 performs update processing for newly adding the amount of donation to the total number of points of all of the credit card members. Furthermore, this point management unit 20 performs processing for managing the total number of donation points for each credit card number. Moreover, the point management unit 20 sends combined information of the credit card number and the number of donation points to the member information management unit 10.

The processing from step S4 to step S7 is repeated each time a credit card member performs shopping.

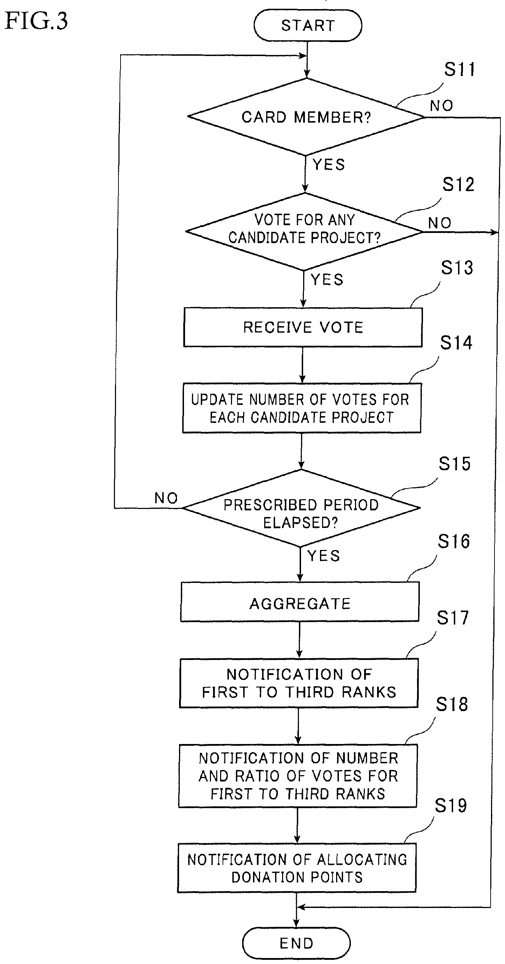

Next, the processing for determining a donation target project by aggregating the result of voting is described with reference to FIGS. 1A, 1B, and 3. In the voting, the credit card member selects a project for donation from among the candidate projects.

In the present embodiment, first, the member terminal 3 logs in the voting site constructed in the project determination unit 30 of the point donation system server 1. Then, as shown in step S11 of FIG. 3, the member terminal 3 proves the credit card membership by receiving authentication of the project determination unit 30, and then performs voting. As shown in step S12, the project determination unit 30 determines whether voting for any candidate project has been performed on the voting site. When voting has been performed, as shown in step S13, the project determination unit 30 performs processing for receiving the vote. On the other hand, when voting has not been performed, the processing is completed.

Subsequently, as shown in step S14, the project determination unit 30 updates the number of votes obtained for each candidate project.

Next, as shown in step S15, the project determination unit 30 confirms whether or not a prescribed period, i.e., a period in which the member terminals 3 can vote, has elapsed. The votable period is preferably set to a relatively long period like e.g. one year or six months.

The processing of steps S11-S14 is repeated during the prescribed period.

When it is determined in step S16 that the prescribed period has elapsed, the project determination unit 30 performs final aggregation in step S16. The first to third ranks in the number of votes obtained are determined in this aggregation.

Then, as shown in step S17, the project determination unit 30 sends information on the candidate projects having the number of votes obtained in the first to third ranks to the candidate project management unit 40. Based on this information, the candidate project management unit 40 sends a project execution command to the corresponding project operator server 5.

Furthermore, as shown in step S18, the project determination unit 30 generates information on the result of voting for the projects in the first to third ranks. The project determination unit 30 sends the information to all of the project operator servers 5 through the point management unit 20. This voting result information includes e.g. the total number of votes, the voting ratio of each project in the first to third ranks to the total votes, and the voting ratio of each project in the first to third ranks to the total number of votes of all of the projects in the first to third ranks.

Based on this voting result information, the point management unit 20 performs processing for allocating the donation points to the projects in the first to third ranks and converting them to actual project money (i.e. donation amount). As shown in step S19, a notification of this project money information is sent from this point management unit 20 to all of the project operator servers 5.

The notifications of the voting result information and the project money may be performed to only the project operators whose projects are determined to be started. Based on these notifications, the project operators determined to be allocated with donation points start projects using the donation points as project money.

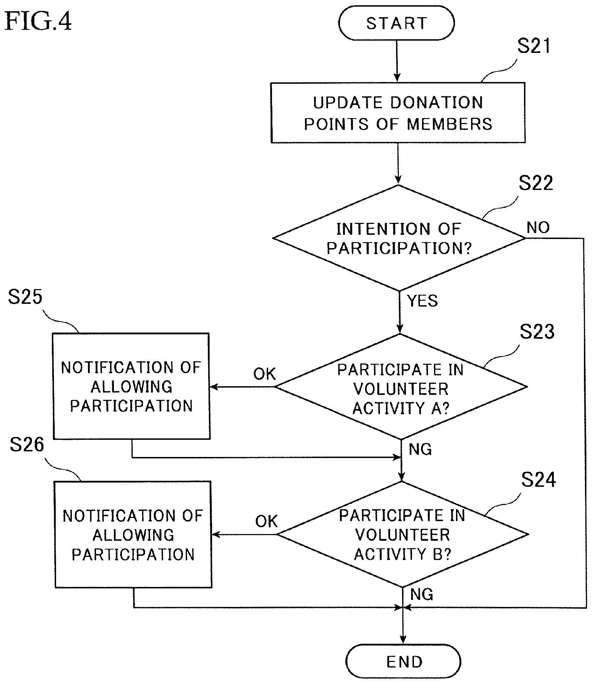

Next, the processing for enabling a credit card member to participate in a prescribed volunteer activity by repeating payment using the credit card on e.g. shopping is described with reference to FIGS. 1A, 1B, and 4. The present embodiment is described with reference to an example in which the kind of volunteer activities that each credit card member can participate in is determined based on the cumulative number of acquired donation points rather than the number of donation points currently retained by the credit card member. The presence or absence of the intention of each credit card member to participate in volunteer activities is registered at the time of e.g. application for the credit card.

As described above, when a credit card is used for e.g. shopping, the member information management unit 10 updates the number of donation points for each member (identified by e.g. the corresponding credit card number) (see step S7 of FIG. 2). Then, the update information is transmitted to the volunteer management unit 50. As shown in step S21 of FIG. 4, the volunteer management unit 50 updates the cumulative number of donation points for each member based on the received update information.

Next, as shown in step S22, the volunteer management unit 50 determines the presence or absence of the intention of the member to participate in volunteer activities. The processing is completed when it is determined in step S22 that the member has no intention to participate in volunteer activities.

On the other hand, when it is registered that the member has an intention to participate in volunteer activities, as shown in step S23, the volunteer management unit 50 first determines whether or not the credit card member is qualified to participate in volunteer activity A. This determination is based on whether or not the cumulative number of donation points acquired by the credit card member has reached a prescribed value.

When it is determined that the member is qualified for participation in step S23, the volunteer management unit 50 sends a notification to the credit card member using e.g. a mail or a message sending function as shown in step S25. The notification indicates that the member is allowed to participate in volunteer activity A.

Furthermore, as shown in step S23, the volunteer management unit 50 determines whether or not the credit card member is qualified to participate in volunteer activity B. This determination is also based on whether or not the cumulative number of donation points acquired by the credit card member has reached a prescribed value. The "prescribed values" for determining the qualification for participation in volunteer activities A, B may be equal or different.

When it is determined that the member is qualified for participation in step S24, the volunteer management unit 50 sends a notification to the credit card member using e.g. a mail or a message sending function as shown in step S26. The notification indicates that the member is allowed to participate in volunteer activity B.

Thus, when a plurality of volunteer activities are registered, it is determined sequentially for each volunteer activity whether to give a volunteer participation right. For instance, if ten kinds of volunteer activities are registered, the determination is performed ten times.

As described above, the point donation system of the present embodiment includes a member information processing unit 60, a point management unit 20, a candidate project management unit 40, and a project determination unit 30. The member information processing unit 60 gives a voting right to the credit card member whose information on the credit card is recorded. The point management unit 20 accumulates donation points granted in accordance with e.g. payment by the member. The candidate project management unit 40 manages candidate projects to be performed by donation. The project determination unit 30 receives votes for the candidate projects from the credit card members. Thus, in the point donation system of the present embodiment, the points granted by e.g. usage of the credit card can be automatically accumulated as donation points. This facilitates making a donation. Furthermore, the credit card member votes for a project as desired, and the project having a large number of votes obtained is performed. Thus, a large amount of money can be donated to a project having wide support. This can make the usage of donation satisfactory to all of the credit card members.

Furthermore, in the present embodiment, the points are allocated to the determined projects in accordance with the number of votes obtained. Thus, a large amount of money can be donated to a project having wider support. This can make the usage of donation more satisfactory to the members.

In the present embodiment, credit card members are targeted as members of the point donation system. Thus, it can be expected to collect a relatively large number of donation points. Accordingly, it can be expected to make a relatively large amount of donation.

In the present embodiment, a voting right for one vote is given to each credit card member. This enables the voting result to reflect the opinion of the members relatively correctly.

Furthermore, in the present embodiment, a volunteer participation right for participating in a prescribed volunteer activity is granted in accordance with the cumulative number of donation points. This can prompt the members interested in volunteer activities to actively use the system for point donation.

The embodiments described above have been described in order to facilitate understanding the present invention, and have not been described in order to limit the present invention.

For instance, in the above-described embodiment, a voting right for one vote is given to each member. However, the embodiment is not limited thereto. One credit card member may be allowed to cast a plurality of votes. As an example, the allowed number of votes may be increased in accordance with the number of donation points. In this method, as the member makes a larger amount of donation, the donation is more likely to be made to the project desired by the member. Thus, the credit card company can prompt each credit card member to actively use the credit card issued by the company for e.g. payment.

Furthermore, in the above-described embodiment, the system is constructed so that the total amount of points granted by e.g. payment are used as donation points. However, the embodiment is not limited thereto. The system may be constructed so that part of the granted points can be automatically used as donation points. In this case, a fixed rate (e.g. 10%) of the granted points may be automatically made available for donation points. Alternatively, a fixed amount (e.g. 10 points) of the granted points may be automatically made available for donation points.

The above-described embodiment is described with reference to the example in which one point is granted per 100 yen and corresponds to 1 yen of donation. However, the embodiment is not limited thereto. The grant rate of points and the conversion rate of points to money can be determined appropriately.

Furthermore, in the above-described embodiment, the member is a credit card member, and the system is constructed so that points are automatically granted and donated when the member uses the credit card for e.g. payment. However, the embodiment is not limited thereto. The member may be other than a credit card member. For instance, the present invention is also applicable to a system in which a provider of goods or services grants points to members in accordance with the amount of payment. Furthermore, the present invention is also applicable to a system in which a common point service provider commissioned by a plurality of providers of goods or services grants points to customers.

Furthermore, in the above-described embodiment, the member terminal 3 accesses the online shopping site of the dealer server 4 through the Internet and performs shopping. Then, points in accordance with the amount of payment are granted. However, the present invention is not limited to points granted by Internet online shopping. For instance, the present invention is also applicable to shopping in a brick-and-mortar shop of the dealer.

Furthermore, the present invention is also applicable to a system in which points are granted on shopping by paying money or electronic money while presenting a point card in a brick-and-mortar shop.

Furthermore, in the above-described embodiment, the candidate projects having the number of votes obtained in the first to third ranks are allocated with donation points in accordance with the number (ratio) of votes obtained. However, the embodiment is not limited thereto. The allocation of donation points may be performed suitably. For instance, the candidate projects having the number of votes obtained in the first to third ranks may be uniformly allocated with equal points. Alternatively, the points may be allocated in accordance with a predetermined allocation ratio irrespective of the number of votes obtained. Furthermore, the number of projects started is also not limited. For instance, the total amount may be donated to only the project having the number of votes obtained in the first rank. On the other hand, the donation may be allocated to a larger number of projects, such as projects having the number of votes obtained in the first to tenth ranks, in accordance with the number of votes obtained or a predetermined allocation ratio.

### [Reference Signs List]

- 1: point donation system server
- 2: card company server
- 3: member terminal
- 4: dealer server
- 5: project operator server
- 6: voluntary body server
- 10: member information management unit
- 20: point management unit
- 30: project determination unit
- 40: candidate project management unit
- 50: volunteer management unit
- 60: member information processing unit

## Claims

1. A point donation system that manages donation points granted to a plurality of members from a point service provider and that makes a donation using the donation points, the point donation system comprising:
a member information management unit configured to manage member information of the plurality of members;
a point management unit configured to manage the donation points granted to the members;
a candidate project management unit configured to manage a plurality of kinds of candidate projects for the donation; and
a project determination unit configured to receive voting from the members authenticated by the member information management unit for one or more of the plurality of candidate projects managed by the candidate project management unit and to select one or more target projects for the donation from among the plurality of candidate projects in accordance with a result of the voting,
wherein the project determination unit further performs processing for sending information indicating the selected target projects and information indicating the result of the voting to the point management unit, and
the point management unit further performs processing for allocating, in accordance with the result of the voting, an amount of donation corresponding to total donation points accumulated by all of the members to the target projects selected by the project determination unit.

2. The point donation system according to claim 1, wherein the point management unit accumulates, as the donation points, only a predetermined proportion or number of points from among the points granted to the members by the point service provider.

3. The point donation system according to claim 1 or 2, wherein the point service provider is a credit card company, a provider of goods or services, or a provider of a common point service commissioned by a plurality of providers of goods or services.

4. The point donation system according to one of claims 1 to 3, wherein a voting right for one vote is given to each member for each prescribed period.

5. The point donation system according to one of claims 1 to 3, wherein a voting right for a number of votes corresponding to a number of the accumulated donation points is given to each of the members for each prescribed period.

6. The point donation system according to one of claims 1 to 5, further comprising:
a volunteer management unit configured to manage a plurality of volunteer activities,
wherein the volunteer management unit performs processing for receiving, from the point management unit, information indicating a cumulative number of the donation points granted to and donated by the members, and for granting the members a volunteer participation right determined in accordance with the cumulative number.
